# EUROPÄISCHE PATENTANMELDUNG

(11) **EP 3 851 400 A1**
(43) Veröffentlichungstag der Anmeldung: **21.07.2021**
(21) Anmeldenummer: 21020047.3
(22) Anmeldetag: 07.12.2018
(51) Int. Cl.: B65H 33/04, B65H 3/00, B65D 57/00, B65B 25/14, B32B 29/08, B31F 1/28, B65D 65/40, B65D 71/00, B41M 7/00, B32B 27/10, B32B 27/32, B32B 29/00, B65H 1/04, B65H 1/26, D21H 27/30, D21H 27/40

(54) **VERWENDUNG EINER ZWISCHENLAGE FÜR DAS EINFÜGEN ZWISCHEN BEDRUCKSTOFF-STAPELN**

(30) Priorität: 14.12.2017 DE 102017011590
(62) Teilanmeldung aus: 18822002.4
(71) Anmelder: Giesecke+Devrient Currency Technology GmbH, 81677 München (DE)
(72) Erfinder: Olschewski, Günter, 04683 Naunhof (DE); Hoffmann, Steffen, 01796 Pirna (DE); Dittrich, Mike, 01328 Dresden OT Eschdorf (DE); Händler, Uwe, 01796 Pirna (DE)

(57) **Zusammenfassung**

Die Erfindung betrifft eine Verwendung einer Zwischenlage (4) als stabilisierende Zwischenlage für das Einfügen zwischen Bedruckstoff-Stapeln (3, 6), wobei die Zwischenlage für das Einfügen zwischen Bedruckstoff-Stapeln geeignet ist, eine Oberseite und eine Unterseite aufweist und zumindest zweischichtig ist, mit einer unteren, mit Polsterfähigkeit ausgestatteten, Gestaltabweichungen von der idealen Oberfläche absorbierenden Schicht und einer oberen, die Planlage stabilisierenden und Schutz gegen mechanische Beanspruchungen verleihenden Schicht, wobei sowohl die Oberseite als auch die Unterseite der Zwischenlage jeweils eine den Reibungswiderstand gegenüber dem Bedruckstoff verringernde Oberflächenveredelung aufweist.

## Beschreibung

Die Erfindung betrifft ein Verfahren zum Bedrucken von Bedruckstoffen. Die Erfindung betrifft des Weiteren eine Zwischenlage und eine Verwendung derselben.

Sicherheitspapierbögen dienen als Ausgangsmaterial bei der drucktechnischen Herstellung von Wertdokumenten, insbesondere Banknoten. Sicherheitspapiere benötigen im Hinblick auf die Lagerung und den Transport einen umfassenden mechanischen und klimatischen Schutz. Heutzutage werden Sicherheitspapiere vorwiegend in sogenannten Einzelries-Verpackungen auf Paletten gestapelt. Eine Einzelverpackung von 500 Bögen stellt derzeit die international gebräuchliche Standard-Verpackung dar. Im Schritt des Verpackens der Sicherheitspapierbögen einerseits sowie im Schritt der Vorbereitung der verpackten Sicherheitspapierbögen auf den Vorgang des Bedruckens andererseits ist die Handhabung der Bögen mit einem hohen manuellen Aufwand verbunden, bei gleichzeitiger Gefahr der Beschädigung und des Materialverlusts. Weiterhin stellen die Kundenanforderungen bezüglich der Planlage gestapelter Bögen und der Stapelbarkeit der Bögen eine wachsende Herausforderung dar. Eine weitere, allgemeine Forderung an Verpackungssysteme ist angesichts der Nachhaltigkeit die Senkung der Anzahl an Verpackungen und der Menge des Verpackungsmülls.

Im Hinblick auf gängige Verpackungsmaterialien ist die Herstellung von Faltkisten mittels Falzen und Kleben, die Herstellung von Faltbodenbeuteln aus Folie und die Herstellung von Einzelriesverpackungen für Banknotenpapiere bekannt.

Ausgehend vom oben geschilderten Stand der Technik liegt der Erfindung die allgemeine Aufgabe zugrunde, eine kundenfreundlichere Verpackung für Bedruckstoffe, insbesondere Sicherheitspapierbögen, bereitzustellen, die bei vereinfachter Nutzung eine verbesserte Stapellage bietet und darüber hinaus wirtschaftlich und nachhaltig produziert werden kann.

Wünschenswert sind insbesondere:
- eine einfache, schnelle Auspackbarkeit;
- ein geringer Vorbereitungsaufwand für druckfertige Bedruckstoff-Stapel;
- ein ausreichender mechanischer und klimatischer Schutz für sämtliche Versandarten, darunter LKW-Transport, Luftfracht und Überseetransport;
- eine gute Transportraumnutzung;
- ein niedriges Verpackungsgewicht; und
- ein hoher Anteil von nachhaltigem, beschränkungsfrei nutzbarem Verpackungsmaterial.

Eine weitere Aufgabe betrifft die Bereitstellung eines verbesserten Verfahrens zum Bedrucken von Bedruckstoffen.

Die Aufgabe wird durch die in den unabhängigen Ansprüchen definierten Merkmalskombinationen gelöst. Weiterbildungen der Erfindung sind Gegenstand der Unteransprüche.

### Zusammenfassung der Erfindung

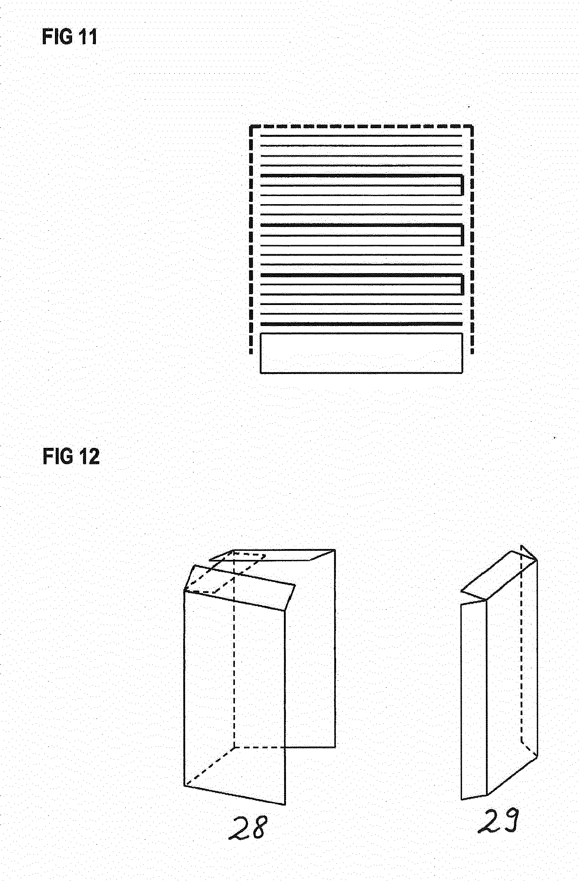

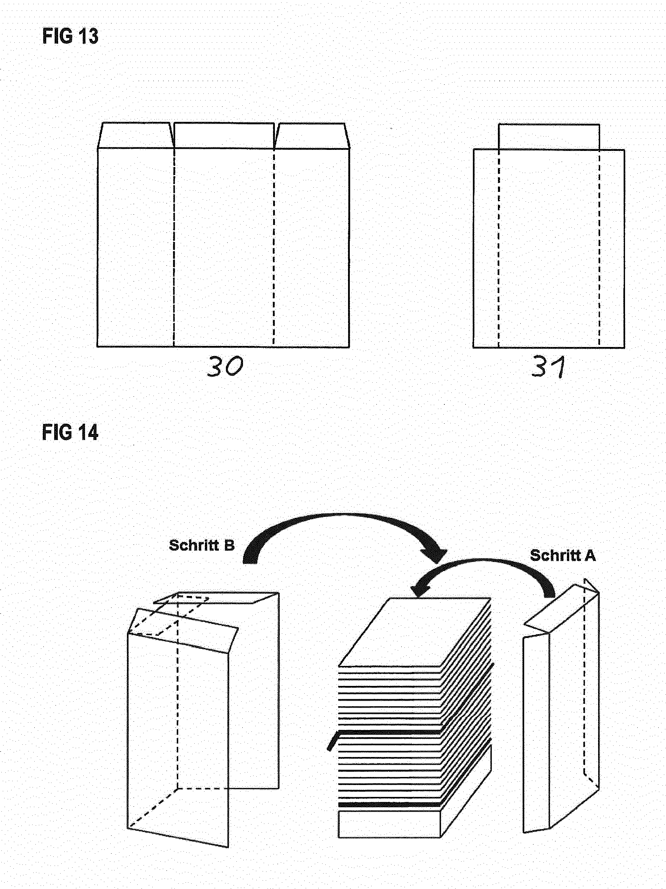

1. (Erster Aspekt der Erfindung) Verpackung mit darin enthaltenen, registergenau angeordneten Bedruckstoffen und Zwischenlagen, umfassend
   a) einen Stapelträger;
   b) eine auf dem Stapelträger angeordnete erste Zwischenlage, einen auf der ersten Zwischenlage angeordneten ersten Bedruckstoff-Stapel, eine auf dem ersten Bedruckstoff-Stapel angeordnete zweite Zwischenlage, einen auf der zweiten Zwischenlage angeordneten zweiten Bedruckstoff-Stapel und optional zumindest eine weitere Folge von Elementen bestehend aus einer weiteren, auf dem darunter befindlichen Bedruckstoff-Stapel angeordneten Zwischenlage und einem auf der weiteren Zwischenlage angeordneten, weiteren Bedruckstoff-Stapel;
   c) einen Mantel, der die auf dem Stapelträger angeordneten Elemente, bestehend aus der ersten Zwischenlage, dem ersten Bedruckstoff-Stapel, der zweiten Zwischenlage, dem zweiten Bedruckstoff-Stapel und den optionalen weiteren Elementen, vollständig in Form einer sich vom Stapelträger bis hin zum obersten Element erstreckenden Haube an vier Seitenflächen und einer Oberseite eng umschließt.
   Eine exemplarische Verpackung mit darin enthaltenen, registergenau angeordneten Bedruckstoffen, umfasst:
   a) einen Stapelträger;
   b) eine auf dem Stapelträger angeordnete erste Zwischenlage, einen auf der ersten Zwischenlage angeordneten ersten Bedruckstoff-Stapel, eine auf dem ersten Bedruckstoff-Stapel angeordnete zweite Zwischenlage, einen auf der zweiten Zwischenlage angeordneten zweiten Bedruckstoff-Stapel, eine auf dem zweiten Bedruckstoff-Stapel angeordnete dritte Zwischenlage, einen auf der dritten Zwischenlage angeordneten dritten Bedruckstoff-Stapel, eine auf dem dritten Bedruckstoff-Stapel angeordnete vierte Zwischenlage und einen auf der vierten Zwischenlage angeordneten vierten Bedruckstoff-Stapel;
   c) einen Mantel, der die auf dem Stapelträger angeordneten Elemente, nämlich die ersten bis vierten Zwischenlagen und die ersten bis vierten Bedruckstoff-Stapel, vollständig in Form einer sich vom Stapelträger bis hin zum obersten Element erstreckenden Haube an vier Seitenflächen und einer Oberseite eng umschließt.
   Der Stapelträger kann insbesondere wiederverwendbar sein, also für den wiederholten Gebrauch vorgesehen sein. Gemäß einer bevorzugten Variante ist der Stapelträger lediglich für den einmaligen Gebrauch vorgesehen, sozusagen ein Wegwerfstapelträger.
   Gemäß einer bevorzugten Variante wird die Verpackung so transportiert, dass der Stapelträger und sämtliche darauf befindlichen Elemente oberhalb einer (Holz-)Palette angeordnet werden, wobei die (Holz-)Palette hinsichtlich ihrer Länge und Breite jeweils größere Abmessungen als der Stapelträger aufweist. Auf diese Weise wird die Verpackung zusätzlich vor eventuellen Beschädigungen geschützt. Die Verpackung kann z.B. mittels Spannbändern auf der (Holz-)Palette fixiert werden. Die (Holz-)Palette ist insbesondere mit sich länglich erstreckenden Öffnungen versehen, die für das Einführen von Gabeln eines Flurförderzeugs, z.B. eines Gabelstaplers oder einer Hubeinrichtung einer Druckmaschine, geeignet sind.
2. (Bevorzugte Ausgestaltung) Verpackung nach Klausel 1, wobei die Zwischenlagen jeweils eine Oberseite und eine Unterseite aufweisen und zumindest zweischichtig sind, mit einer unteren, mit Polsterfähigkeit ausgestatteten, Gestaltabweichungen von der idealen Oberfläche absorbierenden Schicht und einer oberen, die Planlage stabilisierenden und Schutz gegen mechanische Beanspruchungen verleihenden Schicht, wobei sowohl die Oberseite als auch die Unterseite der Zwischenlage jeweils eine den Reibungswiderstand gegenüber dem Bedruckstoff verringernde Oberflächenveredelung aufweist.
3. (Bevorzugte Ausgestaltung) Verpackung nach Klausel 2, wobei die Zwischenlagen jeweils auf einer zweiwelligen Wellpappe basieren, bei der zwei verschiedene Wellenarten kombiniert sind. Es wird bevorzugt, dass die obere Wellenbahn auf einer Feinwelle basiert und die untere Wellenbahn auf einer Grobwelle oder Mittelwelle basiert.
4. (Bevorzugte Ausgestaltung) Verpackung nach Klausel 2 oder 3, wobei die den Reibungswiderstand gegenüber dem Bedruckstoff verringernde Oberflächenveredelung auf einer Folienkaschierung oder auf einem UV-Lack beruht, wobei eine Folienkaschierung, insbesondere eine Kaschierung mit einer Polyethylen-Folie, bevorzugt wird.
5. (Bevorzugte Ausgestaltung) Verpackung nach einer der Klauseln 1 bis 4, wobei zumindest die zweite Zwischenlage und die optionalen höheren Zwischenlagen an genau einer Seitenfläche der registergenau angeordneten Bedruckstoffe und Zwischenlagen jeweils einen für das manuelle oder automatische Herausziehen der jeweiligen Zwischenlage aus oberhalb und unterhalb der Zwischenlage vorliegenden Bedruckstoff-Stapeln geeigneten Überstand aufweisen.
   Die Überstände (oder zumindest ein Überstand) sind vorzugsweise so beschaffen, dass sie an den jeweils unterhalb vorliegenden Bedruckstoff-Stapel anklappbar sind. Weiterhin wird bevorzugt, dass die Überstande innerhalb der Verpackung mit den darin enthaltenen, registergenau angeordneten Bedruckstoffen und Zwischenlagen in einem an den jeweils unterhalb vorliegenden Bedruckstoff-Stapel angeklappten Zustand vorliegen.
   Gemäß einer Variante sind die Überstände (oder zumindest ein Überstand) vorzugsweise so beschaffen, dass sie an den jeweils oberhalb vorliegenden Bedruckstoff-Stapel anklappbar sind. Dies wird beispielsweise dann bevorzugt, wenn die unterste, direkt auf dem Stapelträger befindliche Zwischenlage einen Überstand aufweist.
   Insbesondere wird bevorzugt, dass die einzelnen Zwischenlagen zusätzlich zu dem für das manuelle oder automatische Herausziehen der jeweiligen Zwischenlage aus dem Bedruckstoff-Stapel geeigneten ersten Überstand zwei weitere Überstände aufweisen, nämlich einen links vom ersten Überstand angeordneten zweiten Überstand und einen rechts vom ersten Überstand angeordneten dritten Überstand, wobei alle drei Überstände so beschaffen sind, nach unten und/oder nach oben an einen Bedruckstoff-Stapel anklappbar zu sein.
6. (Bevorzugte Ausgestaltung) Verpackung nach einer der Klauseln 1 bis 5, wobei der Mantel ein Faltkarton ist, der insbesondere auf Vollpappe oder auf einer einwelligen Wellpappe basiert.
7. (Bevorzugte Ausgestaltung) Verpackung nach Klausel 6, wobei der Faltkarton an seiner Innenseite eine Folienkaschierung, insbesondere eine Kaschierung mit einer Polyethylen-Folie, aufweist. Mittels der Folienkaschierung ist ein guter mechanischer Schutz und ein Wasserdampf-bremsender Schutz erzielbar.
8. (Bevorzugte Ausgestaltung) Verpackung nach Klausel 6 oder 7, wobei der Faltkarton aus zwei Zuschnitten gebildet ist, die jeweils die auf dem Stapelträger angeordneten Elemente bei Betrachtung von oben auf den Stapel gesehen U-förmig umschließen. Es wird bevorzugt, die beiden Zuschnitte mittels eines mit einem Aufreißfaden versehenen Packbands zu dem Faltkarton zusammenzufügen. Das Packband ist insbesondere ein heißklebendes Packband. Infolge des Aufreißfadens können die beiden zum Faltkarton zusammengefügten Zuschnitte werkzeuglos wieder voneinander getrennt werden.
9. (Bevorzugte Ausgestaltung) Verpackung nach Klausel 8, wobei der erste Zuschnitt der Darstellung (I), siehe die Bezugsnummer 28 in der Figur 12, entspricht und der zweite Zuschnitt der Darstellung (II), siehe die Bezugsnummer 29 in der Figur 12, entspricht.
10. (Bevorzugte Ausgestaltung) Verpackung nach Klausel 9, wobei der erste Zuschnitt und der zweite Zuschnitt jeweils ein Netz gemäß den Formeln (III), siehe die Bezugsnummer 30 in der Figur 13, bzw. (IV), siehe die Bezugsnummer 31 in der Figur 13, aufweisen.
11. (Bevorzugte Ausgestaltung) Verpackung nach Klausel 8, wobei der erste Zuschnitt und der zweite Zuschnitt identisch sind und jeweils der Darstellung (I), siehe die Bezugsnummer 28 in der Figur 12, entsprechen.
12. (Bevorzugte Ausgestaltung) Verpackung nach Klausel 11, wobei der erste Zuschnitt und der zweite Zuschnitt jeweils ein Netz gemäß der Formel (III), siehe die Bezugsnummer 30 in der Figur 13, aufweisen.
13. (Bevorzugte Ausgestaltung) Verpackung nach einer der Klauseln 1 bis 12, wobei der Stapelträger auf einem Faserguss-Teil, einem Vollpapp-Gefach, einer Wabenplatte, einer Polymerplatte, einer Schaumstoffplatte oder einem Holzträger basiert und vorzugsweise mit sich länglich erstreckenden Öffnungen versehen ist, die für das Einführen von Gabeln eines Flurförderzeugs, z.B. eines Gabelstaplers oder einer Hubeinrichtung einer Druckmaschine, in den Stapelträger geeignet sind. Gemäß einer Variante können die sich länglich erstreckenden Öffnungen in Form einer genutet geformten Oberseite des Stapelträgers vorliegen.
14. (Bevorzugte Ausgestaltung) Verpackung nach einer der Klauseln 1 bis 13, wobei die Bedruckstoff-Stapel jeweils eine Anzahl von Bedruckstoffen in einem Bereich von 200 bis 2500 Bögen, vorzugsweise 400 bis 1500 Bögen, enthalten.
15. (Bevorzugte Ausgestaltung) Verpackung nach einer der Klauseln 1 bis 14, wobei die Anzahl der Bedruckstoff-Stapel und Zwischenlagen jeweils eine Zahl in einem Bereich von 5 bis 12 annehmen.
16. (Bevorzugte Ausgestaltung) Verpackung nach einer der Klauseln 1 bis 15, wobei 4000 bis 8000 Bedruckstoffe enthalten sind.
17. (Bevorzugte Ausgestaltung) Verpackung nach einer der Klauseln 1 bis 16, wobei die Bedruckstoffe Sicherheitspapierbögen zur Herstellung von Wertdokumenten, insbesondere Banknoten, sind.
18. (Bevorzugte Ausgestaltung) Verpackung nach einer der Klauseln 1 bis 17, wobei die Sicherheitspapierbögen mit Wasserzeichen oder Foliensicherheitselementen, insbesondere Folienstreifen oder Folienpatches bzw. Folienetiketten, versehen sind, die zu Abweichungen von der idealen Planlage der einzelnen Bögen im Stapel führen, und innerhalb der Bedruckstoff-Stapel gegebenenfalls keilförmige Zusatzelemente, insbesondere Keillatten, zur Verbesserung der Planlage enthalten sind.
19. (Zweiter Aspekt der Erfindung) Verfahren zum Bedrucken von Bedruckstoffen mit einer mit einem Anleger zur Vereinzelung und Zuführung der Bedruckstoffe in ein Druckwerk ausgestatteten Druckmaschine, umfassend
   1) den Schritt des Bereitstellens registergenau auf einem Stapelträger angeordneter Bedruckstoffe mit einer auf dem Stapelträger angeordneten ersten Zwischenlage, einem auf der ersten Zwischenlage angeordneten ersten Bedruckstoff-Stapel, einer auf dem ersten Bedruckstoff-Stapel angeordneten zweiten Zwischenlage, einem auf der zweiten Zwischenlage angeordneten zweiten Bedruckstoff-Stapel und optional zumindest einer weitere Folge von Elementen bestehend aus einer weiteren, auf dem darunter befindlichen Bedruckstoff-Stapel angeordneten Zwischenlage und einem auf der weiteren Zwischenlage angeordneten, weiteren Bedruckstoff-Stapel;
   2) den Schritt des Vereinzelns, Greifens und Übergebens einzelner Bedruckstoffe des obersten Bedruckstoff-Stapels an das Druckwerk, bis eine vorbestimmte Anzahl weniger noch verbleibender Bedruckstoffe im Bedruckstoff-Stapel erreicht ist;
   3) den Schritt des manuellen oder automatischen Herausziehens und Entfernens der unterhalb des obersten Bedruckstoff-Stapels vorhandenen Zwischenlage unter Beibehaltung der registergenauen Anordnung der gestapelten Bedruckstoffe;
   4) den Schritt des Vereinzelns, Greifens und Übergebens einzelner Bedruckstoffe des Bedruckstoff-Stapels an das Druckwerk, bis eine vorbestimmte Anzahl weniger noch verbleibender Bedruckstoffe im Bedruckstoff-Stapel erreicht ist;
   5) optional das Wiederholen der Schritte 3) und 4), insbesondere bis keine oder eine vorbestimmte Anzahl weniger noch verbleibender Bedruckstoffe im ersten Bedruckstoff-Stapel erreicht ist.
   In den Schritten 2), 4) und 5) liegt die vorbestimmte Anzahl weniger noch verbleibender Bedruckstoffe unabhängig voneinander in einem bevorzugten Bereich von 100 bis 1000 Bedruckstoffen, weiter bevorzugt in einem Bereich von 200 bis 750 Bedruckstoffen, insbesondere bevorzugt in einem Bereich von 250 bis 500 Bedruckstoffen.
20. (Bevorzugte Ausgestaltung) Verfahren nach Klausel 19, wobei die Zwischenlagen jeweils eine Oberseite und eine Unterseite aufweisen und zumindest zweischichtig sind, mit einer unteren, mit Polsterfähigkeit ausgestatteten, Gestaltabweichungen von der idealen Oberfläche absorbierenden Schicht und einer oberen, die Planlage stabilisierenden und Schutz gegen mechanische Beanspruchungen verleihenden Schicht, wobei sowohl die Oberseite als auch die Unterseite der Zwischenlage jeweils eine den Reibungswiderstand gegenüber dem Bedruckstoff verringernde Oberflächenveredelung aufweist.
21. (Bevorzugte Ausgestaltung) Verfahren nach Klausel 20, wobei die Zwischenlagen jeweils auf einer zweiwelligen Wellpappe basieren, bei der zwei verschiedene Wellenarten kombiniert sind. Es wird bevorzugt, dass die obere Wellenbahn auf einer Feinwelle basiert und die untere Wellenbahn auf einer Grobwelle oder Mittelwelle basiert.
22. (Bevorzugte Ausgestaltung) Verfahren nach Klausel 20 oder 21, wobei die den Reibungswiderstand gegenüber dem Bedruckstoff verringernde Oberflächenveredelung auf einer Folienkaschierung oder auf einem UV-Lack beruht, wobei eine Folienkaschierung, insbesondere eine Kaschierung mit einer Polyethylen-Folie, bevorzugt wird.
23. (Bevorzugte Ausgestaltung) Verfahren nach einer der Klauseln 19 bis 22, wobei zumindest die zweite Zwischenlage und die optionalen höheren Zwischenlagen an genau einer Seitenfläche der registergenau angeordneten Bedruckstoffe und Zwischenlagen jeweils einen für das manuelle oder automatische Herausziehen der jeweiligen Zwischenlage aus oberhalb und unterhalb der Zwischenlage vorliegenden Bedruckstoff-Stapeln geeigneten Überstand aufweisen.
   Die Überstände (oder zumindest ein Überstand) sind vorzugsweise so beschaffen, dass sie an den jeweils unterhalb vorliegenden Bedruckstoff-Stapel anklappbar sind.
   Gemäß einer Variante sind die Überstände (oder zumindest ein Überstand) vorzugsweise so beschaffen, dass sie an den jeweils oberhalb vorliegenden Bedruckstoff-Stapel anklappbar sind. Dies wird beispielsweise dann bevorzugt, wenn die unterste, direkt auf dem Stapelträger befindliche Zwischenlage einen Überstand aufweist.
   Insbesondere wird bevorzugt, dass die einzelnen Zwischenlagen zusätzlich zu dem für das manuelle oder automatische Herausziehen der jeweiligen Zwischenlage aus dem Bedruckstoff-Stapel geeigneten ersten Überstand zwei weitere Überstände aufweisen, nämlich einen links vom ersten Überstand angeordneten zweiten Überstand und einen rechts vom ersten Überstand angeordneten dritten Überstand, wobei alle drei Überstände so beschaffen sind, nach unten und/oder nach oben an einen Bedruckstoff-Stapel anklappbar zu sein.
24. (Bevorzugte Ausgestaltung) Verfahren nach einer der Klauseln 19 bis 23, wobei
   - im Schritt 1) das Bereitstellen registergenau auf einem Stapelträger angeordneter Bedruckstoffe so erfolgt, dass zusätzlich ein Mantel vorgesehen ist, der die auf dem Stapelträger angeordneten Elemente, bestehend aus der ersten Zwischenlage, dem ersten Bedruckstoff-Stapel, der zweiten Zwischenlage, dem zweiten Bedruckstoff-Stapel und den optionalen weiteren Elementen, vollständig in Form einer sich vom Stapelträger bis hin zum obersten Element erstreckenden Haube an vier Seitenflächen und einer Oberseite eng umschließt;
   - vor der Durchführung des Schritts 2) der Mantel so entfernt wird, dass die registergenaue Anordnung der gestapelten Bedruckstoffe beibehalten wird.
25. (Bevorzugte Ausgestaltung) Verfahren nach Klausel 24, wobei der Mantel ein Faltkarton ist, der insbesondere auf Vollpappe oder auf einer einwelligen Wellpappe basiert.
26. (Bevorzugte Ausgestaltung) Verfahren nach Klausel 25, wobei der Faltkarton an seiner Innenseite eine Folienkaschierung, insbesondere eine Kaschierung mit einer Polyethylen-Folie, aufweist. Mittels der Folienkaschierung ist ein guter mechanischer Schutz und ein Wasserdampf-bremsender Schutz erzielbar.
27. (Bevorzugte Ausgestaltung) Verfahren nach Klausel 25 oder 26, wobei der Faltkarton aus zwei Zuschnitten gebildet ist, die jeweils die auf dem Stapelträger angeordneten Elemente bei Betrachtung von oben auf den Stapel gesehen U-förmig umschließen. Es wird bevorzugt, die beiden Zuschnitte mittels eines mit einem Aufreißfaden versehenen Packbands zu dem Faltkarton zusammenzufügen. Das Packband ist insbesondere ein heißklebendes Packband. Infolge des Aufreißfadens können die beiden zum Faltkarton zusammengefügten Zuschnitte werkzeuglos wieder voneinander getrennt werden.
28. (Bevorzugte Ausgestaltung) Verfahren nach Klausel 27, wobei der erste Zuschnitt der Darstellung (I), siehe die Bezugsnummer 28 in der Figur 12, entspricht und der zweite Zuschnitt der Darstellung (II), siehe die Bezugsnummer 29 in der Figur 12, entspricht.
29. (Bevorzugte Ausgestaltung) Verfahren nach Klausel 28, wobei der erste Zuschnitt und der zweite Zuschnitt jeweils ein Netz gemäß den Formeln (III), siehe die Bezugsnummer 30 in der Figur 13, bzw. (IV), siehe die Bezugsnummer 31 in der Figur 13, aufweisen.
30. (Bevorzugte Ausgestaltung) Verfahren nach Klausel 27, wobei der erste Zuschnitt und der zweite Zuschnitt identisch sind und jeweils der Darstellung (I), siehe die Bezugsnummer 28 in der Figur 12, entsprechen.
31. (Bevorzugte Ausgestaltung) Verfahren nach Klausel 30, wobei der erste Zuschnitt und der zweite Zuschnitt jeweils ein Netz gemäß der Formel (III), siehe die Bezugsnummer 30 in der Figur 13, aufweisen.
32. (Bevorzugte Ausgestaltung) Verfahren nach einer der Klauseln 19 bis 31, wobei der Stapelträger auf einem Faserguss-Teil, einem Vollpapp-Gefach, einer Wabenplatte, einer Polymerplatte, einer Schaumstoffplatte oder einem Holzträger basiert und vorzugsweise mit sich länglich erstreckenden Öffnungen versehen ist, die für das Einführen von Gabeln eines Flurförderzeugs, z.B. eines Gabelstaplers oder einer Hubeinrichtung einer Druckmaschine, in den Stapelträger geeignet sind. Gemäß einer Variante können die sich länglich erstreckenden Öffnungen in Form einer genutet geformten Oberseite des Stapelträgers vorliegen.
33. (Bevorzugte Ausgestaltung) Verfahren nach einer der Klauseln 19 bis 32, wobei die anfangs im Schritt 1) bereitgestellten Bedruckstoff-Stapel jeweils eine Anzahl von Bedruckstoffen in einem Bereich von 200 bis 2500 Bögen, vorzugsweise 400 bis 1500 Bögen, enthalten.
34. (Bevorzugte Ausgestaltung) Verfahren nach einer der Klauseln 19 bis 33, wobei die Anzahl der anfangs im Schritt 1) bereitgestellten Bedruckstoff-Stapel und Zwischenlagen jeweils eine Zahl in einem Bereich von 5 bis 12 annehmen.
35. (Bevorzugte Ausgestaltung) Verfahren nach einer der Klauseln 19 bis 34, wobei bei dem anfangs im Schritt 1) bereitgestellten Stapel insgesamt 4000 bis 8000 Bedruckstoffe enthalten sind.
36. (Bevorzugte Ausgestaltung) Verfahren nach einer der Klauseln 19 bis 35, wobei die Bedruckstoffe Sicherheitspapierbögen zur Herstellung von Wertdokumenten, insbesondere Banknoten, sind.
37. (Bevorzugte Ausgestaltung) Verfahren nach einer der Klauseln 19 bis 36, wobei die Sicherheitspapierbögen mit Wasserzeichen oder Foliensicherheitselementen, insbesondere Folienstreifen oder Folienpatches bzw. Folienetiketten, versehen sind, die zu Abweichungen von der idealen Planlage der einzelnen Bögen im Stapel führen, und innerhalb der Bedruckstoff-Stapel gegebenenfalls keilförmige Zusatzelemente, insbesondere Keillatten, zur Verbesserung der Planlage enthalten sind, die im Zuge des Verfahrens sukzessive manuell oder automatisch unter Beibehaltung der registergenauen Anordnung der gestapelten Bedruckstoffe aus dem Stapel herausgezogen und entfernt werden.
38. (Dritter Aspekt der Erfindung) Zwischenlage, geeignet für das Einfügen zwischen Bedruckstoff-Stapeln, eine Oberseite und eine Unterseite aufweisend und zumindest zweischichtig, mit einer unteren, mit Polsterfähigkeit ausgestatteten, Gestaltabweichungen von der idealen Oberfläche absorbierenden Schicht und einer oberen, die Planlage stabilisierenden und Schutz gegen mechanische Beanspruchungen verleihenden Schicht, wobei sowohl die Oberseite als auch die Unterseite der Zwischenlage jeweils eine den Reibungswiderstand gegenüber dem Bedruckstoff verringernde Oberflächenveredelung aufweist.
   Es wird bevorzugt, dass die Zwischenlage einen für das manuelle oder automatische Herausziehen der Zwischenlage aus einem Bedruckstoff-Stapel geeigneten ersten Überstand aufweist. Insbesondere wird bevorzugt, dass die Zwischenlage zusätzlich zu der für das manuelle oder automatische Herausziehen der Zwischenlage aus einem Bedruckstoff-Stapel geeigneten ersten Überstand zwei weitere Überstände aufweist, nämlich einen links vom ersten Überstand angeordneten zweiten Überstand und einen rechts vom ersten Überstand angeordneten dritten Überstand, wobei alle drei Überstände so beschaffen sind, nach unten und/oder nach oben an einen Bedruckstoff-Stapel anklappbar zu sein.
39. (Bevorzugte Ausgestaltung) Zwischenlage nach Klausel 38, wobei die Zwischenlage auf einer zweiwelligen Wellpappe basiert, bei der zwei verschiedene Wellenarten kombiniert sind. Es wird bevorzugt, dass die obere Wellenbahn auf einer Feinwelle basiert und die untere Wellenbahn auf einer Grobwelle oder Mittelwelle basiert.
40. (Bevorzugte Ausgestaltung) Zwischenlage nach Klausel 38 oder 39, wobei die den Reibungswiderstand gegenüber dem Bedruckstoff verringernde Oberflächenveredelung auf einer Folienkaschierung oder auf einem UV-Lack beruht, wobei eine Folienkaschierung, insbesondere eine Kaschierung mit einer Polyethylen-Folie, bevorzugt wird.
41. (Vierter Aspekt der Erfindung) Verwendung der Zwischenlage nach einer der Klauseln 38 bis 40 als stabilisierende Zwischenlage für das Einfügen zwischen Bedruckstoff-Stapeln.
42. (Bevorzugte Ausgestaltung) Verwendung nach Klausel 41, wobei die Bedruckstoffe Sicherheitspapierbögen zur Herstellung von Wertdokumenten, insbesondere Banknoten, sind.
43. (Fünfter Aspekt der Erfindung) Faltkarton aus zwei Zuschnitten, wobei der erste Zuschnitt der Darstellung (I), siehe die Bezugsnummer 28 in der Figur 12, entspricht und der zweite Zuschnitt der Darstellung (II), siehe die Bezugsnummer 29 in der Figur 12, entspricht.
44. (Bevorzugte Ausgestaltung) Faltkarton nach Klausel 43, wobei der erste Zuschnitt und der zweite Zuschnitt jeweils ein Netz gemäß den Formeln (III), siehe die Bezugsnummer 30 in der Figur 13, bzw. (IV), siehe die Bezugsnummer 31 in der Figur 13, aufweisen.
45. (Bevorzugte Ausgestaltung) Faltkarton nach Klausel 43 oder 44, wobei der Faltkarton an seiner Innenseite eine Folienkaschierung, insbesondere eine Kaschierung mit einer Polyethylen-Folie, aufweist.
46. (Fünfter Aspekt der Erfindung) Verwendung des Faltkartons nach einer der Klauseln 43 bis 45 für das Verpacken von Bedruckstoffen.
47. (Bevorzugte Ausgestaltung) Verwendung nach Klausel 46, wobei die Bedruckstoffe Sicherheitspapierbögen zur Herstellung von Wertdokumenten, insbesondere Banknoten, sind.

### Ausführliche Beschreibung der Erfindung

Mit dem Begriff Planlage ist die Lage des Bedruckstoffs, z.B. ein Papierbogen oder ein Sicherheitspapierbögen, auf dem Untergrund gemeint. Eine 100%-ige Planlage bedeutet also, dass der Bedruckstoff überall gleichmäßig auf dem Untergrund liegt und sich alle Punkte der Materialoberfläche in einer Ebene befinden.

Anstelle des Begriffs Folienkaschierung wird hierin auch der Begriff Laminierung verwendet, d.h. die Verklebung mit einer Folie.

Die Erfindung wird nachstehend anhand des Beispiels einer Bogenoffsetdruckmaschine in Verbindung mit den schematisch stark vereinfachten Figuren erläutert, bei deren Darstellung auf eine maßstabs- und proportionsgetreue Wiedergabe verzichtet wurde, um die Anschaulichkeit zu erhöhen. Die Erfindung ist selbstverständlich auch auf weitere Druckmaschinen anwendbar, z.B. Stichtiefdruckmaschinen.

Es zeigen:
- Figur 1: in Schrägansicht ein Beispiel eines Stapelträgers mit einer darauf angeordneten Zwischenlage, einem oberhalb der Zwischenlage angeordneten ersten Bedruckstoff-Stapel, einer einen Überstand aufweisenden Zwischenlage und einem oberhalb der Zwischenlage angeordneten zweiten Bedruckstoff-Stapel;
- Figur 2: das Beispiel gemäß der Figur 1 in Querschnittansicht;
- Figuren 3, 4: das seitliche Herausziehen einer Zwischenlage aus einem Stapel registergenau angeordneter Bedruckstoffe gemäß einem Vergleichsbeispiel, wobei das seitliche Herausziehen der Zwischenlage zu einer Störung der Registerhaltigkeit der gestapelten Bedruckstoffe führt;
- Figur 5: ein Beispiel einer Zwischenlage gemäß der vorliegenden Erfindung, die auf einer zweiwelligen Wellpappe beruht;
- Figur 6: eine sinuswellenförmige Wellenform zur Erläuterung der Begriffe Wellenteilung (t) und Wellenhöhe (h);
- Figuren 7, 8: das seitliche Herausziehen einer Zwischenlage gemäß der vorliegenden Erfindung aus einem Stapel registergenau angeordneter Bedruckstoffe, wobei das seitliche Herausziehen der Zwischenlage mit einer Beibehaltung der Registerhaltigkeit der gestapelten Bedruckstoffe verbunden ist;
- Figur 9: in Schrägansicht ein Ausführungsbeispiel einer erfindungsgemäßen Verpackung mit darin enthaltenen, registergenau angeordneten Bedruckstoffen und Zwischenlagen;
- Figur 10: das Ausführungsbeispiel gemäß der Figur 9 in Querschnittansicht entlang der gestrichelten Linie A-A';
- Figur 11: ein weiteres Ausführungsbeispiel einer erfindungsgemäßen Verpackung mit darin enthaltenen, registergenau angeordneten Bedruckstoffen und Zwischenlagen;
- Figur 12: zwei Karton-Zuschnitte für das Bilden eines erfindungsgemäßen Mantels gemäß einem Ausführungsbeispiel;
- Figur 13: die Netze der Karton-Zuschnitte gemäß der Figur 12 gemäß einem Ausführungsbeispiel;
- Figur 14: das Ummanteln registergenau auf einem Stapelträger angeordneter Zwischenlagen und Bedruckstoffe mit den Karton-Zuschnitten gemäß der Figur 12 gemäß einem Ausführungsbeispiel;
- Figuren 15-20: ein Ausführungsbeispiel für das erfindungsgemäße Verfahren zum Bedrucken von Bedruckstoffen mit einer (Offset-)Druckmaschine, die mit einem Anleger zur Vereinzelung und Zuführung der Bedruckstoffe in ein Druckwerk ausgestattet ist;
- Figur 21: ein Beispiel eines Stapelträgers gemäß der vorliegenden Erfindung, der auf einer Wabenplatte beruht;
- Figur 22: ein weiteres Beispiel eines Stapelträgers gemäß der vorliegenden Erfindung, der auf einem Vollpapp-Gefach beruht;
- Figur 23: ein weiteres Beispiel für eine erfindungsgemäße Zwischenlage; und
- Figur 24: einen Bedruckstoffstapel, der durch drei in der Figur 23 gezeigte Zwischenlagen stabilisiert wird.

Grundsätzlich bestehen Bogenoffsetmaschinen aus den Baugruppen Anleger, Druckwerk und Ausleger. Der Anleger dient zur Vereinzelung und Zuführung der Druckbogen in das erste Druckwerk. Je nach Ausführung können weitere Druckwerke folgen, welche unter anderem mehrere Zylinder sowie Feucht- und Farbwerk enthalten. Nachdem die Bogen alle Druckwerke durchlaufen haben, gelangen sie in den Ausleger. Dieser dient zur Stapelbildung der bedruckten Bogen. Vor Beginn des Druckprozesses muss zunächst ein Stapel Papier in den Anleger der Maschine eingefahren werden. Das Anlagesystem hat dann die Aufgabe die Bogen zu vereinzeln, vom Anlagestapel auf den Anlagetisch zu transportieren und dem ersten Druckwerk zuzuführen. Bei den Einzelbogenanlegern wird jeder Bogen zunächst pneumatisch auf dem Anlagestapel vereinzelt, anschließend an der Vorderkante gegriffen, auf den Anlagetisch geführt und von dort dem ersten Druckwerk übergeben. Der darauf folgende Bogen wird erst dann auf den Anlagetisch befördert, wenn der vorherige Bogen an das erste Druckwerk übergeben wurde. Durch immer höhere Druckgeschwindigkeiten stößt man mit Einzelbogenanlegern an mechanische Grenzen. Um einen ruhigen Bogenlauf und höchste Genauigkeit zu erreichen, sind einerseits eine registergenaue Anordnung der einzelnen, gleichgroßen Bedruckstoffe, insbesondere Papierbögen, in Stapelform und andererseits eine möglichst gute Planlage der einzelnen Bedruckstoffe wünschenswert. Insbesondere im Falle von beim Banknotendruck als Ausgangsmaterial eingesetzten Sicherheitspapierbögen ergeben sich infolge von Wasserzeichen oder Foliensicherheitselementen, wie etwa Folienstreifen oder Folienpatches bzw. Folienetiketten, starke Abweichungen von der idealen Planlage der einzelnen Bögen im Stapel. Zur Stabilisierung der Planlage werden daher üblicherweise Zwischenlagen eingesetzt.

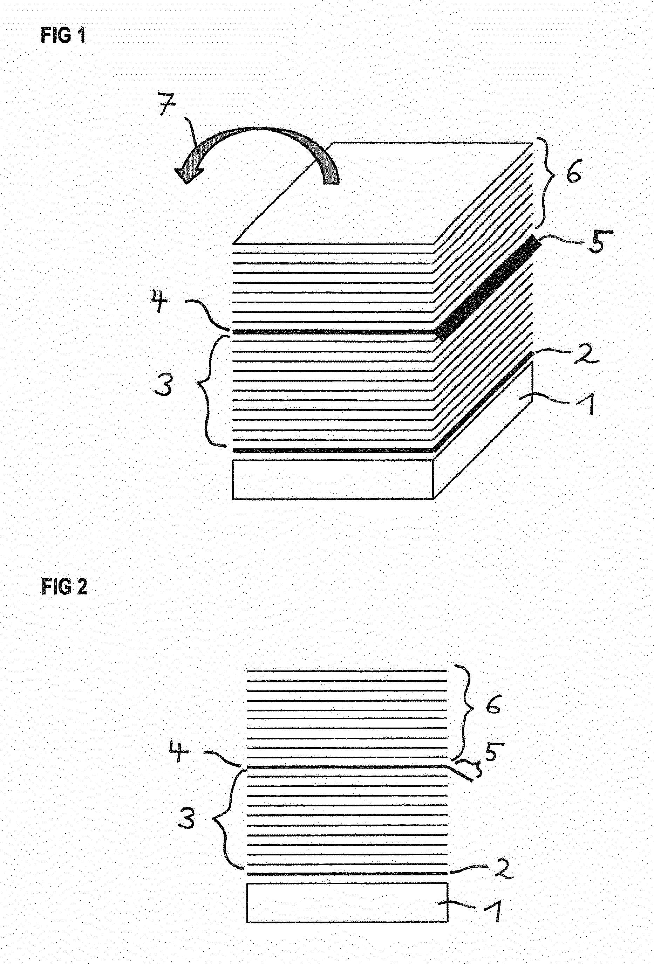

Die Figur 1 zeigt in Schrägansicht ein Beispiel eines Stapelträgers 1 mit einer darauf angeordneten Zwischenlage 2, einem oberhalb der Zwischenlage angeordneten ersten Bedruckstoff-Stapel 3, einer einen Überstand 5 aufweisenden Zwischenlage 4 und einem oberhalb der Zwischenlage 4 angeordneten zweiten Bedruckstoff-Stapel 6. Die Bedruckstoff-Stapel 3 und 6 beinhalten jeweils 500 registergenau angeordnete Bedruckstoffe, im Beispiel Sicherheitspapierbögen zur Herstellung von Banknoten. Der Blockpfeil 7 symbolisiert das pneumatische Vereinzeln jedes Bogens mittels eines Einzelbogenanlegers einer Druckmaschine, wobei jeder Bogen zunächst pneumatisch auf dem Anlagestapel vereinzelt, anschließend an der Vorderkante gegriffen, auf den Anlagetisch geführt und von dort dem Druckwerk übergeben wird. Der Überstand 5 der Zwischenlage 4 weist eine solche Abmessung auf, dass man die Zwischenlage 4 während des kontinuierlichen Druckverfahrens manuell aus den oberhalb und unterhalb der Zwischenlage 4 vorliegenden Bedruckstoff-Stapeln 3 und 6 seitlich herausziehen und entfernen kann, insbesondere wenn nur noch eine geringe Anzahl von Bedruckstoffen, z.B. 250 bis 500 Bedruckstoffe, oberhalb der Zwischenlage 4 vorliegen. Zweckmäßigerweise wird die Anzahl der verbleibenden Bedruckstoffe vor dem Herausziehen der Zwischenlage so variiert, dass sich ein guter Kompromiss zwischen einem frühen bzw. zeitlich flexiblen Entnahmezeitpunkt und einer möglichst geringen Zugkraft ergibt. Auch unterschiedliche Bauformen der Druckmaschinenanleger bestimmen die Spannbreite an verbleibenden Bedruckstoffen vor dem Herausziehen der Zwischenlage.

Die Figur 2 zeigt das Beispiel gemäß der Figur 1 in Querschnittansicht.

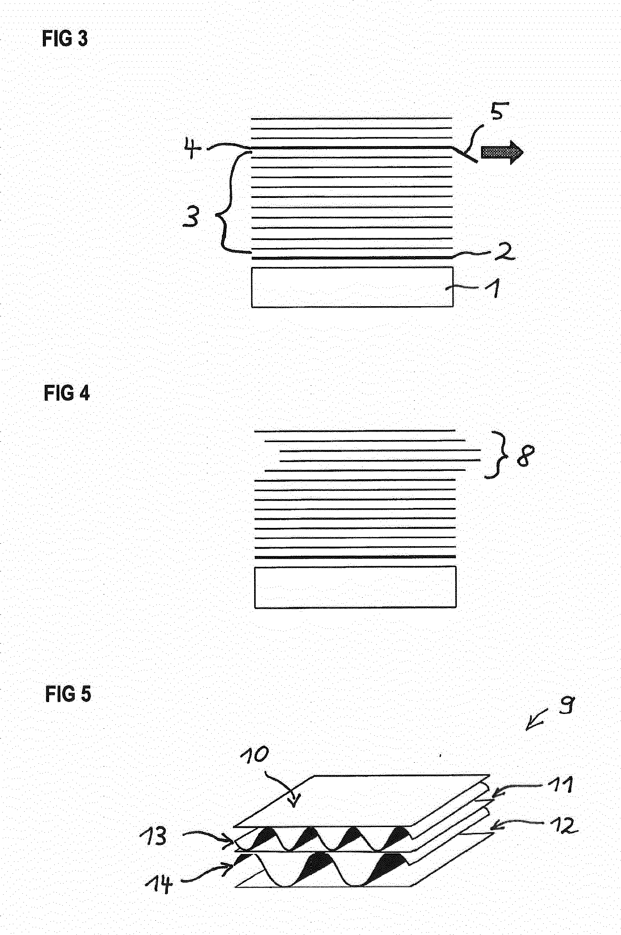

Anhand der Figuren 3 und 4 wird gemäß einem Vergleichsbeispiel das seitliche Herausziehen einer Zwischenlage 4 aus einem Stapel registergenau angeordneter Bedruckstoffe dargestellt, bei dem das seitliche Herausziehen der Zwischenlage 4 mittels des Überstands 5 der Zwischenlage 4 zu einer Störung der Registerhaltigkeit der gestapelten Bedruckstoffe im Bereich 8 führt (siehe Figur 4). Die Zwischenlage 4 ist in diesem Fall eine massive Kunststoffplatte oder eine konventionelle zweiwellige Wellpappe ohne jegliche Oberflächenveredelung, zu der die daran angrenzenden Bedruckstoffe eine verhältnismäßig hohe Adhäsion aufweisen. Die Störung der Registerhaltigkeit der gestapelten Bedruckstoffe im Bereich 8 führt zu einer Unruhe des Bogenlaufs und zu einer starken Beeinträchtigung der Genauigkeit beim Druck.

Die Figur 5 veranschaulicht ein erfindungsgemäßes Beispiel für eine Zwischenlage 9, die auf einer zweiwelligen Wellpappe beruht. Die zweiwellige Wellpappe umfasse drei glatte Papierbahnen 10,11 und 12, sowie eine Papier-Wellenbahn 13 mit einer kleinen Welle und eine Papier-Wellenbahn 14 mit einer großen Welle. Die Oberseite der glatten Papierbahn 10 und die Unterseite der glatten Papierbahn 12 weisen jeweils eine den Reibungswiderstand gegenüber dem Bedruckstoff verringernde Oberflächenveredelung auf, im Beispiel eine Kaschierung bzw. Verklebung mit einer 12 µm dicken Polyethylen-Folie (in der Figur 5 nicht gezeigt). Die Papier-Wellenbahn 13 mit einer kleinen Welle dient als eine die Planlage der oberhalb angeordneten Bedruckstoffe stabilisierende und Schutz gegen mechanische Beanspruchungen verleihende Schicht. Die Papier-Wellenbahn 14 mit einer großen Welle dient als eine mit Polsterfähigkeit ausgestattete, von darunter angeordneten Bedruckstoffen ausgehende Gestaltabweichungen von der idealen Oberfläche absorbierende Schicht. Als Oberflächenveredelung könnte anstelle einer PE-Folie auch ein UV-Lack verwendet werden. Eine PE-Folie als Oberflächenveredelung wird angesichts der verbesserten Erhaltung der Registergenauigkeit im Bedruckstoffstapel allerdings bevorzugt.

Gemäß einer Variante werden die drei glatten Papierbahnen 10, 11 und 12 sowie die Papier-Wellenbahn 13 mit einer kleinen Welle und die Papier-Wellenbahn 14 mit einer großen Welle nicht aus Papier, sondern aus einem Papier-ähnlichen Material, z.B. einem Kunststoff, gefertigt. Papier wird allerdings hinsichtlich der Nachhaltigkeit und des Umweltaspekts bevorzugt.

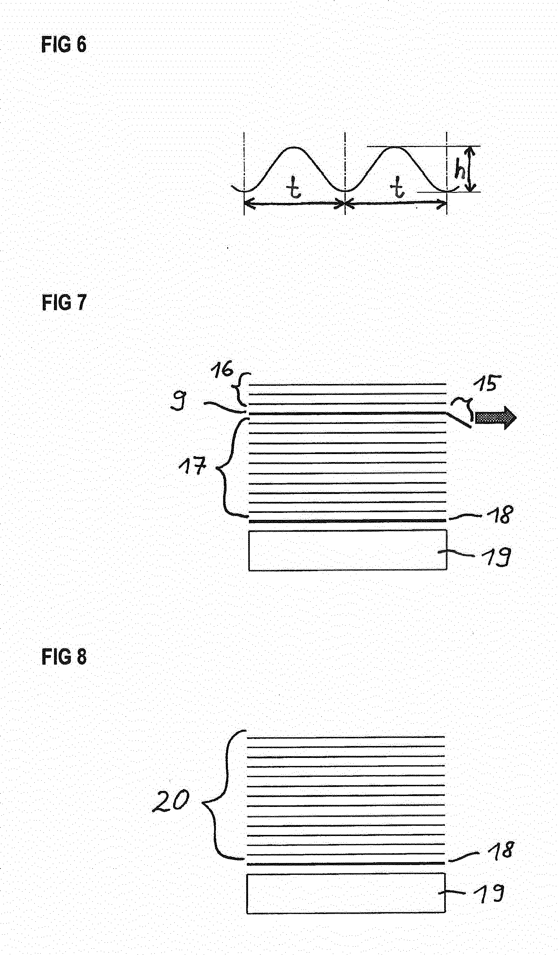

Die in der Figur 5 gezeigte Wellenbahn 13 mit kleiner Welle und Wellenbahn 14 mit großer Welle können hinsichtlich ihrer Abmessungen je nach Bedarf hergestellt werden. Zur beispielhaften Erläuterung wird in der Figur 6 eine sinuswellenförmige Wellenform gezeigt, in der der Parameter "t" für die Wellenteilung steht und der Parameter "h" für die Wellenhöhe steht. Die Wellenteilung (t) ist das Maß zwischen zwei Wellenspitzen, die Wellenhöhe (h) ist das Maß zwischen Wellental und Wellenspitze. Je nach Dimension werden folgende beispielhafte und lediglich bevorzugte Wellenarten unterschieden:
- Grobwelle: t: 7,9 - 10,0 mm; h: 4,0 - 5,0 mm
- Mittelwelle: t: 6,5 - 7,9 mm; h: 3,1 - 4,0 mm
- Feinwelle: t: 3,5 - 6,5 mm; h: 1,9 - 3,1 mm

Gemäß einer bevorzugten Ausgestaltung weist die in der Figur 5 gezeigte Zwischenlage eine auf einer Feinwelle basierende Wellenbahn 13 und eine auf einer Grobwelle oder Mittelwelle basierende Wellenbahn 14 auf.

Die Figuren 7 und 8 veranschaulichen das seitliche Herausziehen der in der Figur 5 dargestellten, erfindungsgemäßen Zwischenlage 9 aus einem Stapel registergenau angeordneter Bedruckstoffe (16,17), wobei das seitliche Herausziehen der Zwischenlage 9 mit einer Beibehaltung der Registerhaltigkeit der gestapelten Bedruckstoffe verbunden ist.

Anhand von weiteren Experimenten wurde entdeckt, dass das umgekehrte Vorhandensein der Zwischenlage innerhalb des Stapels registergenau angeordneter Bedruckstoffe (16,17) dergestalt, dass die Feinwelle unten und die Grobwelle oben vorliegt, im Falle des seitlichen Herausziehens der Zwischenlage aus dem Stapel zu keiner Beibehaltung der Registerhaltigkeit der gestapelten Bedruckstoffe führen würde. Die einzelnen, die Zwischenlage auszeichnenden Faktoren, nämlich die obere Feinwelle, die untere Grobwelle und die Oberflächenveredelung, insbesondere eine PE-Kaschierung, bewirken somit einen Synergismus.

Die Figur 7 zeigt einen Stapelträgers 19 mit einer darauf angeordneten Zwischenlage 18, einem Bedruckstoff-Stapel 17, einer einen Überstand 15 aufweisenden erfindungsgemäßen Zwischenlage 9 und einem oberhalb der erfindungsgemäßen Zwischenlage 9 angeordneten weiteren Bedruckstoff-Stapel 16. Der Bedruckstoff-Stapel 17 beinhaltet 500 registergenau angeordnete Bedruckstoffe, im Beispiel Sicherheitspapierbögen zur Herstellung von Banknoten. Während des kontinuierlichen Druckverfahrens wird die Höhe des Bedruckstoff-Stapels 16 mittels des Einzelbogenanlegers der Druckmaschine durch Greifen und Übergeben der einzelnen Bedruckstoffe an das Druckwerk verringert, bis nur noch eine geringe Anzahl von Bedruckstoffen, z.B. 250 bis 500 Bedruckstoffe, oberhalb der Zwischenlage 9 vorliegen. Der Überstand 15 der Zwischenlage 9 weist eine solche Abmessung auf, dass man die Zwischenlage 9 während des kontinuierlichen Druckverfahrens manuell aus den oberhalb und unterhalb der Zwischenlage 9 vorliegenden Bedruckstoff-Stapeln 16 bzw. 17 seitlich herausziehen und entfernen kann.

Die Figur 8 veranschaulicht das Resultat des seitlichen Herausziehens der erfindungsgemäßen Zwischenlage 9 aus dem Stapel registergenau angeordneter Bedruckstoffe (in der Figur 7 die Bezugsnummern 16 und 17). Wie man sieht, ist das seitliche Herausziehen der Zwischenlage 9 mittels des Überstands 15 mit einer Beibehaltung der Registergenauigkeit der gestapelten Bedruckstoffe 20 verbunden, weil die Zwischenlage 9 lediglich eine geringe Adhäsion an die daran angrenzenden Bedruckstoff aufweist. Die Beibehaltung der Registerhaltigkeit der gestapelten Bedruckstoffe gewährleistet einen ruhigen Bogenlauf und vermeidet eventuelle Beeinträchtigungen der Genauigkeit beim Druck.

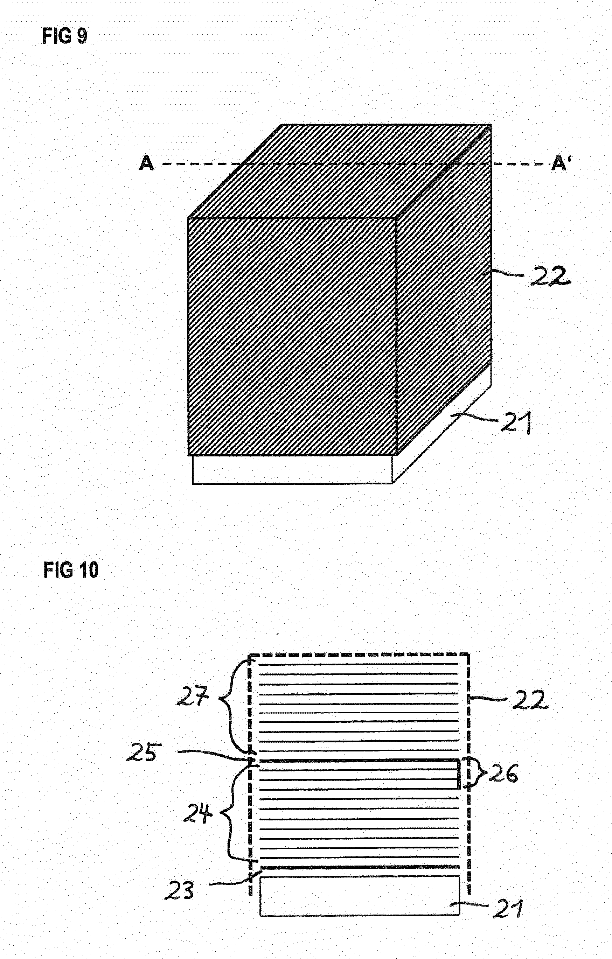

Die Figur 9 zeigt in Schrägansicht ein Ausführungsbeispiel einer erfindungsgemäßen Verpackung mit darin enthaltenen, registergenau angeordneten Bedruckstoffen und Zwischenlagen. In der Schrägansicht erkennbar sind der Stapelträger 21 und der Mantel 22, der die Bedruckstoffe und Zwischenlagen vollständig in Form einer sich vom Stapelträger bis hin zum obersten Bedruckstoff-Stapel erstreckenden Haube an den vier Seitenflächen und der Oberseite eng umschließt. Der Mantel 22 ist im vorliegenden Beispiel ein auf Vollpappe oder auf einer einwelligen Wellpappe basierender Faltkarton, der an seiner Innenseite eine Folienkaschierung, insbesondere eine Kaschierung mit einer Polyethylen-Folie, aufweist. Mittels der Folienkaschierung ist ein guter mechanischer Schutz und ein Wasserdampf-bremsender Schutz erzielbar.

Die Figur 10 zeigt das Ausführungsbeispiel gemäß der Figur 9 in Querschnittansicht entlang der gestrichelten Linie A-A'. Auf dem Stapelträger 21 befinden sich eine Zwischenlage 23, ein Bedruckstoff-Stapel 24, eine einen Überstand 26 aufweisende Zwischenlage 25 und eine oberhalb der Zwischenlage 25 angeordneter weiterer Bedruckstoff-Stapel 27. Die Bedruckstoff-Stapel 24 und 27 beinhalten jeweils 500 registergenau angeordnete Bedruckstoffe, im Beispiel Sicherheitspapierbögen zur Herstellung von Banknoten. Der Überstand 26 der Zwischenlage 26 ist so beschaffen, dass er innerhalb der Verpackung in einem an den Bedruckstoff-Stapel 24 angeklappten Zustand vorliegt. Die Bedruckstoff-Stapel 24 und 27, die Zwischenlagen 23 und 25 sowie teilweise der Stapelträger 21 werden vom Mantel 22 eng umschlossen. Auf diese Weise wird ein besonders vorteilhafter mechanischer und klimatischer Schutz für sämtliche Versandarten, darunter LKW-Transport, Luftfracht und Überseetransport, gewährleistet.

Die Figur 11 zeigt ein weiteres Ausführungsbeispiel einer erfindungsgemäßen Verpackung mit darin enthaltenen, registergenau angeordneten Bedruckstoffen und Zwischenlagen. Die Verpackung umfasst im vorliegenden Beispiel einen Stapelträger, eine auf dem Stapelträger angeordnete erste Zwischenlage, einen auf der ersten Zwischenlage angeordneten ersten Bedruckstoff-Stapel, eine auf dem ersten Bedruckstoff-Stapel angeordnete zweite Zwischenlage, einen auf der zweiten Zwischenlage angeordneten zweiten Bedruckstoff-Stapel, eine auf dem zweiten Bedruckstoff-Stapel angeordnete dritte Zwischenlage, einen auf der dritten Zwischenlage angeordneten dritten Bedruckstoff-Stapel, eine auf dem dritten Bedruckstoff-Stapel angeordnete vierte Zwischenlage und einen auf der vierten Zwischenlage angeordneten vierten Bedruckstoff-Stapel, darüber hinaus einen Mantel, der die auf dem Stapelträger angeordneten Elemente, nämlich die ersten bis vierten Zwischenlagen und die ersten bis vierten Bedruckstoff-Stapel, vollständig in Form einer sich vom Stapelträger bis hin zum obersten Element erstreckenden Haube an vier Seitenflächen und einer Oberseite eng umschließt. Die Bedruckstoff-Stapel beinhalten jeweils 500 registergenau angeordnete Bedruckstoffe, im Beispiel Sicherheitspapierbögen zur Herstellung von Banknoten.

Acht weitere Ausführungsbeispiele für eine erfindungsgemäße Verpackung, die an das Beispiel gemäß der Figur 11 angelehnt sind und in den Figuren nicht gezeigt sind, beinhalten einzelne Bedruckstoff-Stapel mit jeweils 1000 Bedruckstoffen (z.B. Sicherheitspapierbögen zur Herstellung von Banknoten) und Zwischenlagen in einer jeweiligen Anzahl, die je nach Ausführungsbeispiel einen Wert in einem Bereich von fünf bis zwölf annimmt.

Die Figur 12 veranschaulicht die Erzeugung des in den Figuren 9 und 10 gezeigten Mantels 22 gemäß einem Ausführungsbeispiel. Hierfür verwendet man zwei, jeweils auf Vollpappe oder auf einwelliger Wellpappe basierende Karton-Zuschnitte 28 und 29, die jeweils an einer Seite eine Folienkaschierung, insbesondere eine Kaschierung mit einer Polyethylen-Folie, aufweisen. Die Zuschnitte 28 und 29 sind von oben betrachtet jeweils U-förmig und können z.B. mittels eines mit einem Aufreißfaden versehenen Packbands zu einem Faltkarton 22 zusammenzufügt werden. Das Packband ist insbesondere ein heißklebendes Packband. Infolge des Aufreißfadens können die beiden zum Faltkarton 22 zusammengefügten Zuschnitte 28 und 29 werkzeuglos wieder voneinander getrennt werden.

Die Figur 13 zeigt zwei mögliche Netze 30 und 31, die jeweils den in der Figur 12 dargestellten Karton-Zuschnitten 28 bzw. 29 entsprechen.

Die in der Figur 13 gezeigten Netze sind selbstverständlich nur als Beispiele zu verstehen, die hinsichtlich der gezeigten Abmessungen und der Gestalt der Verschlusslaschen variiert werden können.

Die Erzeugung des in den Figuren 9 und 10 gezeigten Mantels 22 kann alternativ so erfolgen, dass das Zusammenfügen des Mantels 22 lediglich mit zwei identischen Karton-Zuschnitten (z.B. zweimal der in der Figur 12 gezeigte Karton-Zuschnitt 28) durchgeführt wird. Geeignete Abmessungen des Karton-Zuschnitts 28 (und ggf. des dem Karton-Zuschnitt 28 entsprechenden Netzes 30 gemäß der Figur 13) können auf einfache Weise experimentell bestimmt werden.

Die Figur 14 veranschaulicht das Ummanteln registergenau auf einem Stapelträger angeordneter Zwischenlagen und Bedruckstoffe mit den Karton-Zuschnitten gemäß der Figur 12 gemäß einem Ausführungsbeispiel. Dabei wird zunächst in einem Schritt A der in der Figur 12 gezeigte, kleinere Karton-Zuschnitt 29 eng und U-förmig an den zu umschließenden Stapel angelegt. In einem darauffolgenden Schritt B erfolgt das Anlegen des in der Figur 12 gezeigten, größeren Karton-Zuschnitts 28 eng und U-förmig an den zu umschließenden Stapel, wobei der größere Karton-Zuschnitt 28 den kleineren Karton-Zuschnitt 29 teilweise überlappt. Nach Verkleben der beiden Karton-Zuschnitte, z.B. mittels eines bevorzugt mit einem Aufreißfaden versehenen Packbands, kann zur Sicherung des Transportguts optional ein Spannband angebracht werden.

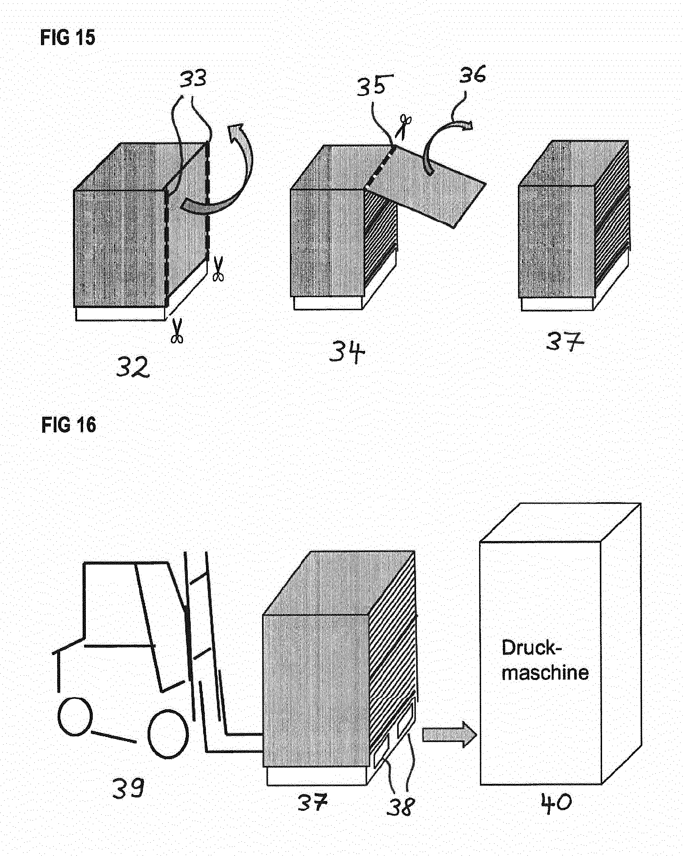

Figuren 15 bis 20 beschreiben ein Ausführungsbeispiel für das erfindungsgemäße Verfahren zum Bedrucken von Bedruckstoffen mit einer (Offset-)Druckmaschine, die mit einem Anleger zur Vereinzelung und Zuführung der Bedruckstoffe in ein Druckwerk ausgestattet ist.

Gemäß der Figur 15 wird zunächst eine Verpackung 32 mit darin enthaltenen, registergenau angeordneten Bedruckstoffen und Zwischenlagen bereitgestellt. Bei der Verpackung 32 handelt es sich z.B. um die gemäß den Figuren 9 und 10 erläuterte Verpackung, die dem Drucker per LKW, Flugzeug oder Schiff vom Papierhersteller geliefert wird.

Gegebenenfalls wird die Verpackung so transportiert, dass der Stapelträger und sämtliche darauf befindlichen Elemente oberhalb einer (Holz-)Palette (in der Figur nicht gezeigt) angeordnet sind, wobei die (Holz-)Palette hinsichtlich ihrer Länge und Breite jeweils größere Abmessungen als der Stapelträger aufweist. Auf diese Weise wird die Verpackung zusätzlich vor eventuellen Beschädigungen geschützt. Die Verpackung kann z.B. mittels Spannbändern auf der (Holz-)Palette fixiert werden. Die (Holz-)Palette ist insbesondere mit sich länglich erstreckenden Öffnungen versehen, die für das Einführen von Gabeln eines Flurförderzeugs, z.B. eines Gabelstaplers oder einer Hubeinrichtung einer Druckmaschine, geeignet sind.

Sobald die Verpackung 32 den Drucksaal erreicht, erfolgt zunächst das Aufschneiden oder Aufreißen (insbesondere im Falle des Vorhandenseins von Aufreißfäden) des Mantels entlang der beiden gestrichelten Linien 33. Der seitliche Faltkarton-Teil, der bevorzugt auf den in der Figur 12 gezeigten Karton-Zuschnitt 29 zurückgeht, lässt sich nach dem Aufschneiden bzw. Aufreißen entlang den gestrichelten Linien 33 nach oben hin von der Verpackung wegklappen (siehe Blockpfeil), sodass die einseitig geöffnete Verpackung 34 erhalten wird.

Bei der einseitig geöffneten Verpackung 34 erfolgt dann das Aufschneiden oder Aufreißen (insbesondere im Falle des Vorhandenseins von Aufreißfäden) entlang der gestrichelten Linie 35. Der seitliche Faltkarton-Teil, der bevorzugt auf den in der Figur 12 gezeigten Karton-Zuschnitt 29 zurückgeht, lässt sich nach dem Aufschneiden bzw. Aufreißen entlang der gestrichelten Linie 35 vom restlichen Teil des Mantels ablösen (siehe der Blockpfeil 36), sodass die Verpackung 37, bei der das verpackte Gut von einer Seite zugänglich ist, erhalten wird.

Gemäß der Figur 16 wird die Verpackung 37, bei der die Bedruckstoffe von einer Seite zugänglich sind, z.B. mittels eines Gabelstaplers 39 für den Einsatz an der Anlegekante der (Offset-)Druckmaschine 40 bereitgestellt. Hierfür ist der Stapelträger 37 vorzugsweise mit sich länglich erstreckenden Öffnungen 38 versehen, die für das Einführen von Gabeln eines Flurförderzeugs, z.B. eines Gabelstaplers 39 oder einer Hubeinrichtung einer Druckmaschine, in den Stapelträger geeignet sind.

Gemäß einer Variante zu der in der Figur 16 gezeigten Methode wird die Verpackung 37 so transportiert, dass der Stapelträger und sämtliche darauf befindlichen Elemente oberhalb einer (Holz-)Palette (in der Figur 16 nicht gezeigt) angeordnet sind, wobei die (Holz-)Palette hinsichtlich ihrer Länge und Breite jeweils größere Abmessungen als der Stapelträger aufweist. Auf diese Weise wird die Verpackung zusätzlich vor eventuellen Beschädigungen geschützt. Die (Holz-)Palette ist insbesondere mit sich länglich erstreckenden Öffnungen versehen, die für das Einführen von Gabeln eines Flurförderzeugs, z.B. eines Gabelstaplers oder einer Hubeinrichtung einer Druckmaschine, in den Stapelträger geeignet sind.

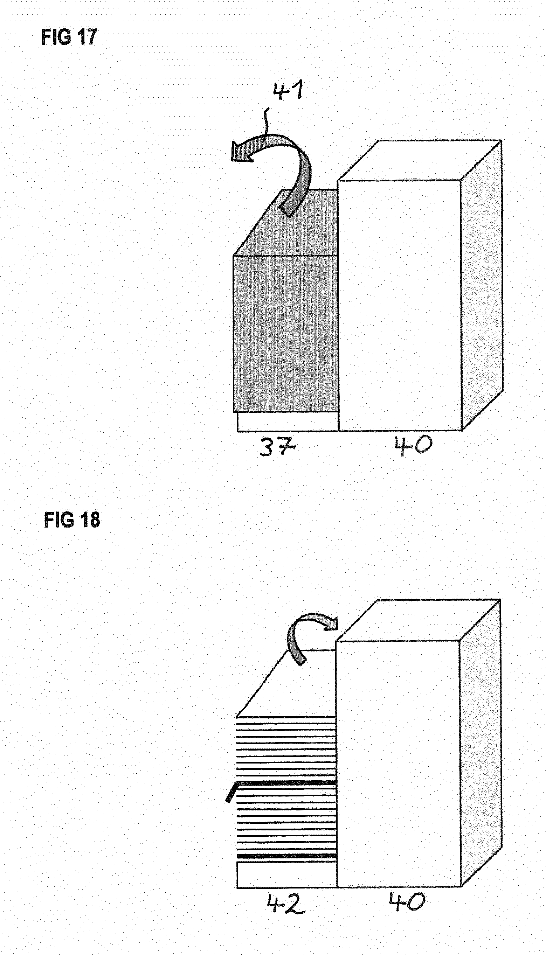

Gemäß der Figur 17 wird in einem darauffolgenden Schritt der Rest des verbliebenen Mantels entfernt (siehe der Blockpfeil 41), sodass ein Stapelträger mit darauf angeordneten, frei zugänglichen Bedruckstoff-Stapeln und Zwischenlagen (siehe die Bezugsnummer 42 in der Figur 18) resultiert. Der zu entfernende Faltkarton-Teil geht bevorzugt auf den in der Figur 12 gezeigten Karton-Zuschnitt 28 zurück.

Die Figur 18 veranschaulicht den Betrieb der (Offset-)Druckmaschine 40. Mittels des Einzelbogenanlegers wird jeder Bogen zunächst pneumatisch auf dem Anlagestapel vereinzelt, anschließend an der Vorderkante gegriffen, auf den Anlagetisch geführt und von dort dem ersten Druckwerk übergeben. Der darauf folgende Bogen wird erst dann auf den Anlagetisch befördert, wenn der vorherige Bogen an das erste Druckwerk übergeben wurde.

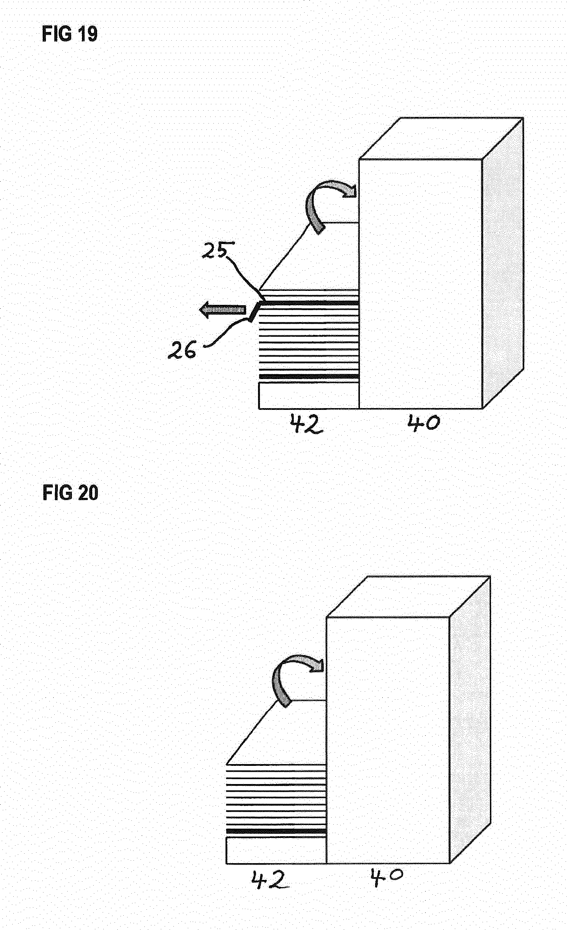

Während des kontinuierlichen Druckverfahrens wird die Zwischenlage 25 mittels des Überstandes 26 manuell oder automatisch aus den oberhalb und unterhalb der Zwischenlage 25 vorliegenden Bedruckstoff-Stapeln seitlich herausgezogen und entfernt, insbesondere wenn nur noch eine geringe Anzahl von Bedruckstoffen, z.B. 250 bis 500 Bedruckstoffe, oberhalb der Zwischenlage 25 vorliegen (siehe Figur 19). Als Zwischenlage dient hierbei die in der Figur 5 gezeigte Zwischenlage mit PE-Folien als Oberflächenveredelung, sodass die Registergenauigkeit im Bedruckstoffstapel erhalten bleibt und das kontinuierliche Druckverfahren ohne Unruhe des Bogenlaufs fortgesetzt werden kann (siehe die Figur 20).

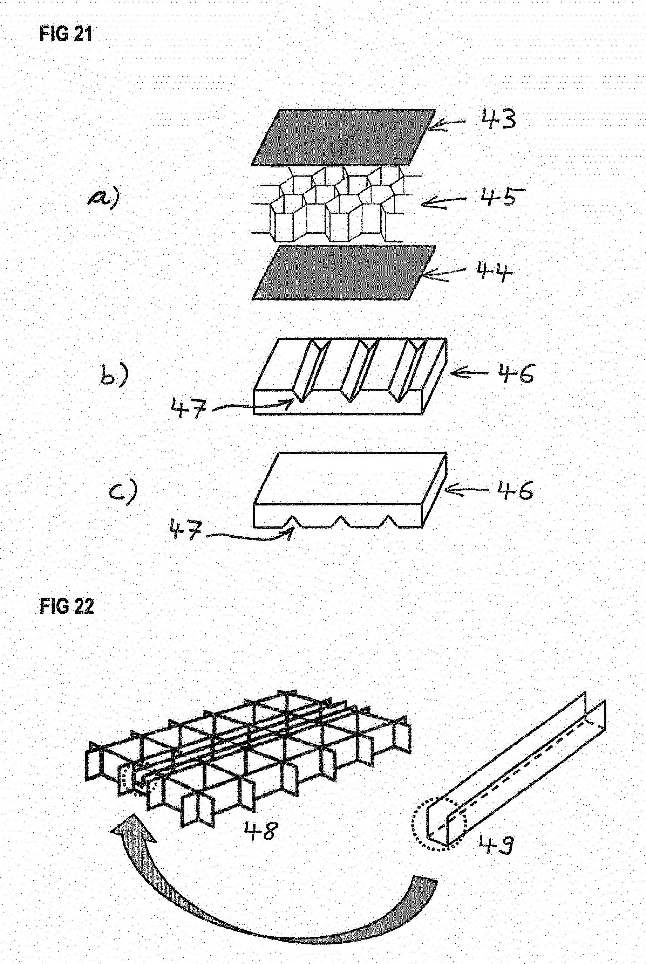

Die Figur 21 zeigt ein Beispiel eines Stapelträgers 46 gemäß der vorliegenden Erfindung, der auf einer Wabenplatte beruht. Ein solcher Stapelträger ist z.B. für den Aufbau der in der Figur 10 oder Figur 11 gezeigten Verpackung (mit dem darin gezeigten Stapelträger 21) verwendbar. Der Stapelträger 46 basiert, wie in der Figur 21 a) erläutert wird, auf einer Sandwichplatte mit tragenden Deckhäuten (43, 44) und einem Stützkern 45 in Wabenform. Die in der Figur 21 a) gezeigte Sandwichplatte wird nachfolgend gegebenenfalls mit sich länglich erstreckenden Öffnungen bzw. Rillen 47 versehen, die z.B. für das Einführen der Gabeln eines Flurförderzeugs, z.B. eines Gabelstaplers oder einer Hubeinrichtung einer Druckmaschine, geeignet sind. In der Figur 21 b) wird der Stapelträger 46 so gezeigt, dass die Rillen 47 gut erkennbar sind. Die Variante gemäß Figur 21 b) zeigt den Stapelträger 46 so, wie er z.B. für den Aufbau der in der Figur 10 gezeigten Verpackung (mit dem darin gezeigten Stapelträger 21) zum Einsatz käme, sodass die Gabeln der Hubeinrichtung einer Druckmaschine die auf dem Stapelträger angeordneten Zwischenlagen und Bedruckstoff-Stapel anheben könnten. Die Variante gemäß Figur 21 c) zeigt den Stapelträger 46 so, wie er z.B. für den Aufbau der in der Figur 10 gezeigten Verpackung (mit dem darin gezeigten Stapelträger 21) zum Einsatz käme, sodass die Gabeln eines Gabelstaplers den Stapelträger und sämtliche darauf angeordneten Zwischenlagen und Bedruckstoff-Stapel transportieren könnten.

Die Figur 22 zeigt ein weiteres Beispiel eines Stapelträgers gemäß der vorliegenden Erfindung, der auf einem Vollpapp-Gefach 48 beruht. Das Vollpapp-Gefach 48 basiert auf einem üblichen Gefach aus Vollpappe, in das gegebenenfalls zusätzlich U-förmige Vollpapp-Einsätze 49 eingelassen sind. Die Vollpapp-Einsätze 49 sind z.B. für das Einführen der Gabeln eines Flurförderzeugs, z.B. eines Gabelstaplers oder einer Hubeinrichtung einer Druckmaschine, geeignet. In der Figur 22 wird der Stapelträger 48 so gezeigt, dass die Rillen bzw. Öffnungen 49 gut erkennbar sind. Die Variante gemäß Figur 22 zeigt den Stapelträger 48 so, wie er z.B. für den Aufbau der in der Figur 10 gezeigten Verpackung (mit dem darin gezeigten Stapelträger 21) zum Einsatz käme, sodass die Gabeln der Hubeinrichtung einer Druckmaschine die auf dem Stapelträger angeordneten Zwischenlagen und Bedruckstoff-Stapel anheben könnten. Gemäß einer Variante kann der in der Figur 22 gezeigte Stapelträger 48 aber auch nach Drehung um 180°, d.h. kopfüber, zum Einsatz kommen, sodass die Gabeln eines Gabelstaplers den Stapelträger und sämtliche darauf angeordneten Zwischenlagen und Bedruckstoff-Stapel transportieren könnten.

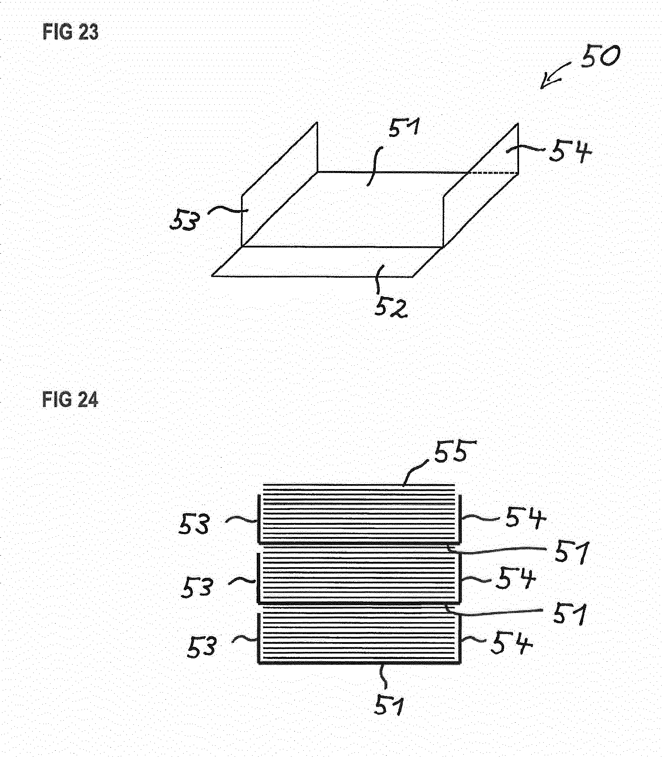

Figur 23 zeigt ein weiteres Beispiel für eine erfindungsgemäße Zwischenlage 50. Die Zwischenlage 50 weist zusätzlich zu der für das manuelle oder automatische Herausziehen der Zwischenlage 50 aus einem Bedruckstoff-Stapel geeigneten ersten Überstand 52 zwei weitere Überstände auf, nämlich einen links vom ersten Überstand 52 angeordneten zweiten Überstand 53 und einen rechts vom ersten Überstand 52 angeordneten dritten Überstand 54, wobei alle drei Überstände 52, 53 und 54 so beschaffen sind, nach unten und/oder nach oben an einen Bedruckstoff-Stapel anklappbar zu sein. Auf diese Weise bildet die Zwischenlage 50 eine Art Kassette bzw. Schublade, innerhalb der die Bedruckstoffe geschützt sind und bezüglich der Registergenauigkeit des Stapels äußerst präzise, d.h. ohne jeglichen Versatz, angeordnet sind.

Figur 24 zeigt einen Bedruckstoffstapel mit einzelnen Bedruckstoffen 55, der durch drei in der Figur 23 gezeigte, übereinander angeordnete Zwischenlagen 50 stabilisiert wird. Der für das manuelle oder automatische Herausziehen der einzelnen Zwischenlage 50 aus dem Bedruckstoff-Stapel geeignete erste Überstand 52 wird der besseren Darstellung der Zeichnung halber nicht gezeigt. Die drei Zwischenlagen 50 bilden sozusagen Schubladen, wobei jeweils der linke Überstand 53 und der rechte Überstand 54 nach oben an den Stapel angeklappt sind. Zudem ist auch der nicht gezeigte Überstand 52 nach oben an den Stapel angeklappt. Die einzelnen Papierbögen 55 werden auf diese Weise hervorragend geschützt und sind bezüglich der Registergenauigkeit des Stapels äußerst präzise, d.h. ohne jeglichen Versatz, angeordnet.

Gemäß einer Variante zur Figur 24 können die Überstände 52, 53 und 54 nicht nach oben, sondern nach unten an den Stapel angeklappt werden.

## Patentansprüche

1. Verwendung einer Zwischenlage als stabilisierende Zwischenlage für das Einfügen zwischen Bedruckstoff-Stapeln, wobei die Zwischenlage für das Einfügen zwischen Bedruckstoff-Stapeln geeignet ist, eine Oberseite und eine Unterseite aufweist und zumindest zweischichtig ist, mit einer unteren, mit Polsterfähigkeit ausgestatteten, Gestaltabweichungen von der idealen Oberfläche absorbierenden Schicht und einer oberen, die Planlage stabilisierenden und Schutz gegen mechanische Beanspruchungen verleihenden Schicht, wobei sowohl die Oberseite als auch die Unterseite der Zwischenlage jeweils eine den Reibungswiderstand gegenüber dem Bedruckstoff verringernde Oberflächenveredelung aufweist.

2. Verwendung nach Anspruch 1, wobei die Zwischenlage auf einer zweiwelligen Wellpappe basiert, bei der zwei verschiedene Wellenarten kombiniert sind, insbesondere bevorzugt so, dass die obere Wellenbahn auf einer Feinwelle basiert und die untere Wellenbahn auf einer Grobwelle oder Mittelwelle basiert.

3. Verwendung nach Anspruch 1 oder 2, wobei die den Reibungswiderstand gegenüber dem Bedruckstoff verringernde Oberflächenveredelung auf einer Folienkaschierung oder auf einem UV-Lack beruht, wobei eine Folienkaschierung, insbesondere eine Kaschierung mit einer Polyethylen-Folie, bevorzugt wird.

4. Verwendung nach einem der Ansprüche 1 bis 3, wobei die Bedruckstoffe Sicherheitspapierbögen zur Herstellung von Wertdokumenten, insbesondere Banknoten, sind.
